(19) **Europäisches Patentamt**
**European Patent Office**
**Office européen des brevets**

(11) **EP 2 238 805 B1**

(12) **EUROPÄISCHE PATENTSCHRIFT**

(45) Veröffentlichungstag und Bekanntmachung des Hinweises auf die Patenterteilung:
**25.11.2015 Patentblatt 2015/48**

(51) Int Cl.:
*H05B 7/148* *(2006.01)* *C21C 5/52* *(2006.01)*
*F27D 19/00* *(2006.01)*

(21) Anmeldenummer: **09706927.2**

(22) Anmeldetag: **28.01.2009**

(86) Internationale Anmeldenummer:
**PCT/EP2009/050925**

(87) Internationale Veröffentlichungsnummer:
**WO 2009/095396 (06.08.2009 Gazette 2009/32)**

(54) **VERFAHREN ZUR ERMITTLUNG EINES STRAHLUNGSMASSES FÜR EINE THERMISCHE STRAHLUNG, LICHTBOGENOFEN, EINE SIGNALVERARBEITUNGSEINRICHTUNG SOWIE PROGRAMMCODE UND EIN SPEICHERMEDIUM ZUR DURCHFÜHRUNG DES VERFAHRENS**

METHOD FOR DETERMINING A RADIATION MEASUREMENT FOR THERMAL RADIATION, ARC FURNACE, A SIGNAL PROCESSING DEVICE, PROGRAMME CODE AND STORAGE MEDIUM FOR CARRYING OUT SAID METHOD

PROCEDE DE DETERMINATION D'UNE MESURE DE RAYONNEMENT POUR UN RAYONNEMENT THERMIQUE, FOUR A ARC ELECTRIQUE, DISPOSITIF DE TRAITEMENT DE SIGNAUX, CODE DE PROGRAMME ET SUPPORT DE MEMOIRE POUR LA MISE EN OEUVRE DU PROCEDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.01.2008 DE 102008006965**

(43) Veröffentlichungstag der Anmeldung:
**13.10.2010 Patentblatt 2010/41**

(73) Patentinhaber: **Primetals Technologies Germany GmbH**
**91052 Erlangen (DE)**

(72) Erfinder:
• **DÖBBELER, Arno**
**91074 Herzogenaurach (DE)**
• **KRÜGER, Klaus**
**22179 Hamburg (DE)**

• **MATSCHULLAT, Thomas**
**90542 Eckental (DE)**
• **RIEGER, Detlef**
**85598 Baldham (DE)**

(74) Vertreter: **Metals@Linz**
**Primetals Technologies Austria GmbH**
**Turmstraße 44**
**4031 Linz (AT)**

(56) Entgegenhaltungen:
**EP-A- 0 637 634      WO-A-2007/009924**
**DE-A1- 19 801 295**

• **"Electric furnace arcs screening - is with frothing agent of slag set by measuring acoustic signals at upper and lower limits of frequencies range" DERWENT,, 1. Januar 1900 (1900-01-01), XP002401121**

**Beschreibung**

Die Erfindung betrifft ein Verfahren zur Ermittlung eines Strahlungsmaßes für eine von einem zwischen einer Elektrode und Schmelzgut brennenden Lichtbogen ausgehende, auf eine Begrenzung des Lichtbogenofens treffende thermische Strahlung, eine Signalverarbeitungseinrichtung, ein Speichermedium und Programmcode zur Durchführung des Verfahrens.

Ein Lichtbogenofen dient der Herstellung von Flüssigmetall, in der Regel Stahl. Das Flüssigmetall wird aus festem Schmelzgut, etwa Schrott oder reduziertem Eisen, zusammen mit weiteren Zuschlagsstoffen hergestellt. Dazu wird mittels einer oder mehrerer Elektroden Energie zum Aufschmelzen des Schmelzguts in den Lichtbogenofen eingebracht, in der Regel in Form eines Lichtbogens zwischen Elektrode und Schmelzgut. Damit das Aufschmelzen möglichst effizient erfolgen kann, sollte möglichst die gesamte vom Lichtbogen bereitgestellte Energie in das Schmelzgut eingebracht werden. Als Schmelzgut wird dabei zu schmelzender Feststoff, Flüssigmetall und/oder auch Schlacke verstanden.

Aufgrund der vorgegebenen Fahrweise bei heutigen Lichtbogenöfen kann es jedoch dazu kommen, dass der Lichtbogen während des Einschmelzprozesses frei brennt. D.h. die vom Lichtbogen, ausgebildet zwischen Elektrode und Schmelzgut, ausgehende thermische Strahlung gelangt in hohem Maß an eine Begrenzung des Lichtbogenofens, insbesondere eine gekühlte Wand des Lichtbogenofens. Dadurch steigt der Energieverbrauch des Ofens, indem einerseits Energie des Lichtbogenofens nur in geringem Umfang in das Schmelzgut eingebracht wird, andererseits ggf. die Kühlleistung zur Kühlung der Ofenwände erhöht werden muss.

Aufgabe der vorliegenden Erfindung ist es, ein Verfahren der eingangs genannten Art bereitzustellen, mit welchem eine einen Betriebszustand einer Elektrode eines Lichtbogenofens charakterisierende Größe bestimmbar ist. Ferner ist es Aufgabe der Erfindung einen zur Durchführung des Verfahrens geeigneten Lichtbogenofen anzugeben sowie eine das Verfahren veranlassende Signalverarbeitungseinrichtung, ein Speichermedium und Programmcode hierfür.

Der das Verfahren betreffende Teil der Aufgabe wird bei einem Verfahren der eingangs genannten Art dadurch gelöst, dass ein der Elektrode zugeführter Elektrodenstrom erfasst wird, wobei Körperschall-Schwingungen des Lichtbogenofens erfasst werden, wobei aus dem erfassten Elektrodenstrom ein einem Frequenzbereich des erfassten Elektrodenstroms zugeordnetes Stromauswertesignal ermittelt wird, wobei aus den erfassten Körperschall-Schwingungen ein einem Frequenzbereich der erfassten Körperschall-Schwingungen zugeordnetes Schwingungsauswertesignal ermittelt wird, wobei als Maß für die thermische Strahlung ein Quotient aus Schwingungsauswertesignal und Stromauswertesignal für wenigstens eine dem erfassten Elektrodenstrom und den erfassten Körperschallschwingungen gemeinsame Frequenz gebildet wird. Als Quotient aus Schwingungsauswertesignal und Stromauswertesignal kann sowohl der Quotient gebildet aus Schwingungsauswertesignal durch Stromauswertesignal als auch der Quotient gebildet aus Stromauswertesignal durch Schwingungsauswertesignal verstanden werden. Diese beiden Quotienten sind äquivalent zur Ermittlung des Strahlungsmaßes verwertbar. Das Strahlungsmaß charakterisiert insbesondere die vom Lichtbogen ausgehende, auf die Begrenzung des Lichtbogenofens treffende Strahlungsleistung. Das Strahlungsmaß kann entweder derart verwendet werden, dass dieses mit steigender Strahlungsleistung auf eine Begrenzung des Lichtbogenofens ansteigt oder derart, dass es mit fallender Strahlungsleistung auf die Begrenzung des Lichtbogenofens ansteigt. In letzterem Fall kann das Strahlungsmaß die Einhüllung des Lichtbogens durch Schmelzgut abbilden. Unter thermische Strahlung ist elektromagnetische Strahlung zu verstehen, welche thermisch wirksam ist, d.h. eine Temperaturänderung der Begrenzung zu Folge hat, auf welche sie trifft.

Dadurch ist es möglich, eine Umhüllung bzw. Einhüllung eines Lichtbogens durch Schaumschlacke bzw. schäumende Schlacke und/oder festem Schmelzgut zu ermitteln. Ist der Lichtbogen vollständig durch Schrott oder Schaumschlacke eingehüllt, ist der Energieeintrag durch den Lichtbogen in das Schmelzgut besonders gut. Denn die thermische Strahlung des Lichtbogens, vorwiegend Infrarot-Strahlung, trifft direkt auf zum Lichtbogen benachbart angeordnetes Schmelzgut und wird von diesem zumindest teilweise absorbiert. Dadurch werden insbesondere gekühlte Wandabschnitte eines Lichtbogenofens vor übermäßiger Erhitzung geschützt und der Energieeintrag in das Schmelzgut verbessert. Dadurch kann Schmelzgut schneller in einer flüssigen Phase bereitgestellt werden und damit ein Abstich des Flüssigmetalls aus dem Lichtbogenofen schneller erfolgen. Dies wiederum führt zur Durchsatzerhöhung für den Lichtbogenofen.

In einer vorteilhaften Ausgestaltung der Erfindung wird als Strahlungsmaß eine Summe aus für mehrere gemeinsame Frequenzen gebildete Quotienten gebildet. Es wird also jeweils ein Quotient aus Schwingungsauswertesignal und Stromauswertesignal für eine bestimmte, gemeinsame Frequenz gebildet. Dies geschieht für mehrere Frequenzen. Es werden also bspw. Quotienten aus Schwingungsauswertesignal und Stromauswertesignal für jeweils 100Hz, 300Hz und 500Hz gebildet. Diese werden dann aufsummiert und die Summe wird als Strahlungsmaß verwendet. Dadurch kann eine besonders hohe Genauigkeit für das Strahlungsmaß erreicht werden, welches die Zustandsgröße der Elektrode, insbesondere die Einhüllung bzw. Umhüllung des an der Elektrode brennenden Lichtbogens, charakterisiert.

In einer weiteren vorteilhaften Ausführungsform der Erfindung ist wenigstens eine der mehreren gemeinsamen Frequenzen aus der Gruppe ausgewählt werden, die aus den Vielfachen der doppelten Betriebsfrequenz der Elektrode besteht. Besonders diese Frequenzen führen zu einer weiteren Erhöhung der Genauigkeit des Strahlungsmaßes. Hierbei sind bevorzugt Frequenzen zu verwenden, die m mal der doppelten Betriebsfrequenz der Elektrode sind, wobei m gleich 1, 2, 3, 4, 5 oder 6. Die Betriebsfrequenz ist die Frequenz, mit welcher eine Elektrode mit einer elektrische Größe, etwa der Spannung bzw. dem Elektrodenstrom, beaufschlagt wird. Die Betriebsfrequenz ist in der Regel die Netzfrequenz des Netzes, von welchem die Elektrode gespeist wird.

In einer weiteren vorteilhaften Ausgestaltung der Erfindung basiert das frequenzabhängige Stromauswertesignal auf $I_n(\omega) \propto \int_a^b I(t)^n e^{-i\omega t} dt$ oder als

$I_n(\omega) \propto \int_a^b |I(t)|^n e^{-i\omega t} dt$ , mit n: Parameter, n ∈ 1,2,3,... , mit i: imaginäre Einheit, mit e: Euler'sche Zahl, mit t: Zeit, mit $\omega$: Kreisfrequenz des Elektrodenstroms, mit I(t): zeitabhängiger, erfasster Elektrodenstrom, mit I($\omega$): frequenzabhängiger Elektrodenstrom, mit a: Anfang des Integrationsintervalls, b: Ende des Integrationsintervalls. a kann bspw. als minus unendlich und b als plus unendlich gewählt werden. Alternativ können auch endliche Intervallgrenze gewählt werden.

Besonders vorteilhaft ist es, dass n für $I_n(\omega) \propto \int_a^b I(t)^n e^{-i\omega t} dt$ gleich zwei gewählt wird. Dadurch erhält man das Quadrat des Elektrodenstroms, welcher besonders einfach ermittelbar ist. Ebenso kann vorteilhaft n für $I_n(\omega) \propto \int_a^b |I(t)|^n e^{-i\omega t} dt$ gleich eins gewählt werden. Dadurch wird der Betrag des Elektrodenstroms verwendet, um das Strahlungsmaß zu bestimmen.

Insbesondere ist es vorteilhaft ist, den Absolutbetrag der Fouriertransformierten $I_n(\omega)$ als frequenzabhängiges Stromauswertesignal zu verwenden, d.h.:

$$|I_n(\omega)| \propto \sqrt{I_n(\omega) I_n^*(\omega)}$$

In einer weiteren vorteilhaften Ausführungsform der Erfindung wird das frequenzabhängige Schwingungsauswertesignal gebildet als frequenzabhängiger Absolutbetrag bzw. Betrag

$$|K_n(\omega)| = \sqrt{K_n(\omega) \cdot K_n(\omega)^*}$$ der Funktion:

$$K_n(\omega) \propto \int_a^b K(t)^n e^{-i\omega t} dt$$

mit n: Parameter, n ∈ 1,2,3,... , mit i: imaginäre Einheit

mit e: Euler'sche Zahl, mit t: Zeit, mit $\omega$ : Kreisfrequenz der erfassten Körperschallschwingungen, mit K(t): zeitabhängiges, erfasster Körperschallsignal, mit K($\omega$): frequenzabhängiges Körperschallsignal, mit K($\omega$)*: konjugiert komplexes Körperschallsignal zu K($\omega$), mit a: Anfang des Integrationsintervalls, mit b: Ende des Integrationsintervalls. Der Absolutbetrag des komplexen Schwingungsauswertesignals ist besonders vorteilhaft für die Ermittlung des Strahlungsmaßes zu verwenden, da dies besonders gute Resultate liefert. Vorteilhaft ist es n gleich eins zu setzen.

In einer weiteren vorteilhaften Ausgestaltung der Erfindung wird das Strahlungsmaß zur Steuerung und/oder Regelung wenigstens einer Prozessgröße des Lichtbogenofens verwendet. Unter Prozessgröße wird jede einstellbare physikalische Größe verstanden, welche den Prozess des Schmelzens von Feststoff in einem Lichtbogenofen, vorzugsweise wesentlich, beeinflusst. Durch die Verwendung des Strahlungsmaßes zur Steuerung und/oder Regelung des Lichtbogenofens ist es möglich, den Automatisierungsgrad des Lichtbogenofens weiter zu erhöhen und damit den Betrieb des Lichtbogenofens weiter zu verbessern. Vorteilhaft ist es insbesondere, ein Verfahren zum Betreiben eines Lichtbogenofens mit wenigstens einer Elektrode vorzusehen, wobei ein dem Lichtbogenofen zugeführter Feststoff mittels eines von der wenigstens einen Elektrode ausgebildeten Lichtbogens geschmolzen wird, wobei ein Strahlungsmaß ermittelt wird, und anhand des ermittelten Strahlungsmaßes eine Prozessgröße des Lichtbogenofens gesteuert und/oder geregelt wird.

Vorteilhaft kann das Verfahren zur Ermittlung eines Strahlungsmaßes mit weiteren Verfahren zur Bestimmung von Zustandsgrößen in einem Lichtbogenofen kombiniert werden. Dadurch ist es möglich, den Betrieb eines Lichtbogenofens möglichst vollumfänglich, dynamisch auf jeweils im Lichtbogenofen vorliegende Zustandsgrößen beim Stahlherstellungsprozess bzw. Schmelzprozess anzupassen.

Der die Signalverarbeitungseinrichtung betreffende Teil der Aufgabe wird gelöst durch eine Signalverarbeitungseinrichtung für einen Lichtbogenofen, mit einem maschinenlesbaren Programmcode, welcher Steuerbefehle aufweist, die die Signalverarbeitungseinrichtung zur Durchführung eines Verfahrens nach einem der Ansprüche 1 bis 8 veranlasst. Dadurch kann die Ermittlung des Strahlungsmaßes automatisiert durchgeführt werden, und es kann anhand des Strahlungsmaßes bei Bedarf direkt eine Steuerung und/oder Regelung einer Prozessgröße des Lichtbogenofens erfolgen. Alternativ kann auch eine manuelle Einstellung von Stellgrößen des Lichtbogenofens durch den Operator anhand des ermittelten und vorzugsweise ausgegebenen, insbesondere graphisch ausgegebenen, Strahlungsmaßes erfolgen.

Der das Speichermedium betreffende Teil der Aufgabe wird gelöst durch ein Speichermedium mit einem darauf gespeicherten maschinenlesbaren Programmcode gemäß Anspruch 12.

Der den Lichtbogenofen betreffende Teil der Aufgabe gelöst durch Lichtbogenofen mit wenigstens einer Elektrode, mit einer Elektrodenstromerfassungseinrichtung zur Erfassung eines der wenigstens einen Elektrode zugeführten Elektrodenstroms, mit Körperschallsensoren zur Erfassung von Körperschall einer Begrenzung des Lichtbogenofens, und mit einer Signalverarbeitungseinrichtung nach Anspruch 10, wobei die Elektrodenstromerfassungseinrichtung und die Körperschallsensoren der Signalverarbeitungseinrichtung wirkverbunden sind. Dadurch kann ein Lichtbogenofen bereitgestellt werden, der anhand eines ermittelten Strahlungsmaßes verbessert betreibbar ist, indem eine eine einen Betriebszustand einer Elektrode des Lichtbogenofens charakterisierende Größe bestimmt wird.

In einer bevorzugten Ausgestaltung des erfindungsgemäßen Lichtbogenofens ist die Signalverarbeitungseinrichtung mit einer Steuer- und/oder Regeleinrichtung zur Ermittlung einer Stellgröße für wenigstens eine Prozessgröße des Lichtbogenofens aus dem Strahlungsmaßes wirkverbunden. Die Signalverarbeitungseinrichtung und die Steuer- und/oder Regeleinrichtung können baulich zusammengefasst oder getrennt voneinander ausgebildet sein. Das Zusammenwirken dieser beiden Einrichtungen erlaubt ein automatisiertes verbessertes Betreiben des Lichtbogenofens. Insbesondere kann die Positionssteuerung der Elektroden, der Energieeintrag, die Zugabe von Zuschlagsstoffen, die Vorhersage von Chargier- und/oder Abstichzeitpunkten verbessert werden bzw. zielgerichteter erfolgen. Unter Stellgröße für eine Prozessgröße wird jede Größe verstanden, mittels welcher eine Prozessgröße mittelbar oder unmittelbar einstellbar ist.

Vorteilhaft kann das Verfahren zur Ermittlung eines Strahlungsmaßes in einem Lichtbogenofen mit weiteren Verfahren zur Bestimmung von Zustandsgrößen in einem Lichtbogenofen kombiniert werden. Dadurch ist es möglich, den Betrieb eines Lichtbogenofens möglichst vollumfänglich, dynamisch auf jeweils im Lichtbogenofen vorliegende Zustandsgrößen beim Stahlherstellungsprozess bzw. Aufschmelzprozess zur Herstellung eines Flüssigmetallbades bzw. Stahlbads anzupassen.

Weitere Vorteile der Erfindung ergeben sich aus einem Ausführungsbeispiel, welches nachfolgend anhand schematischer Zeichnungen genauer erläutert wird. Es zeigen:

FIG 1    eine schematische Darstellung eines Lichtbogenofens zur Ermittlung eines erfindungsgemäßen Strahlungsmaßes,

FIG 2    eine Darstellung eines erfassten Elektrodenstromsignals über die Zeit,

FIG 3    eine Darstellung eines erfassten Körperschallsignals über die Zeit,

FIG 4    eine Darstellung eines Strahlungsmaßes über die Zeit,

FIG 5    ein Flussdiagramm zur Darstellung des schematischen Ablaufs eines Verfahrens zur Ermittlung eines Strahlungsmaßes.

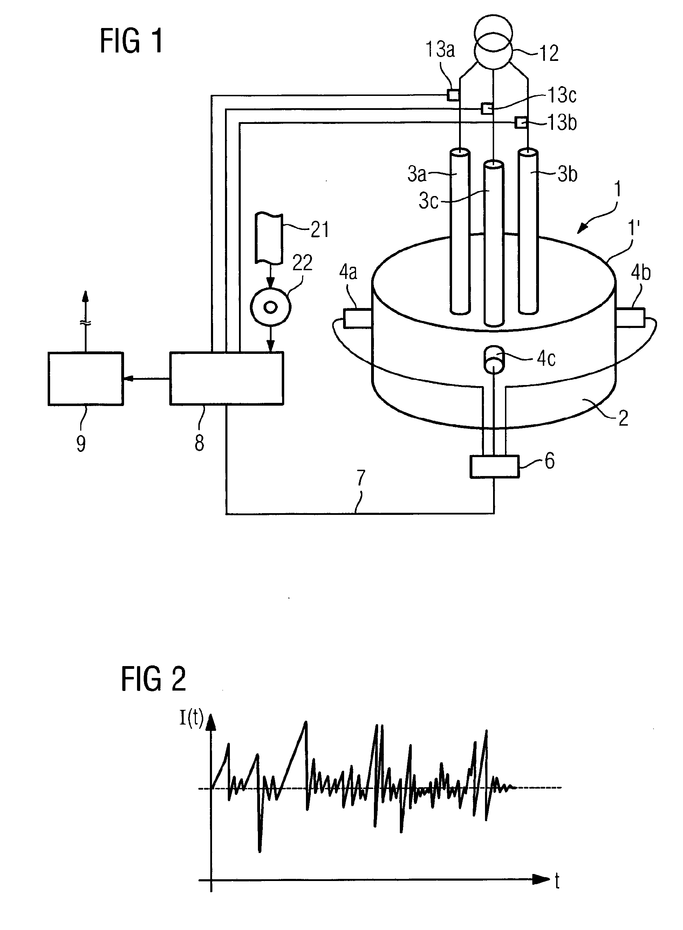

Figur 1 zeigt einen Elektrolichtbogenofen 1 mit mehreren Elektroden 3a, 3b, 3c, die über Stromzuführungen mit einer Stromversorgungseinrichtung 12 gekoppelt sind. Die Stromversorgungseinrichtung 12 weist vorzugsweise einen Ofentransformator auf.

Mit Hilfe von drei Elektroden 3a, 3b, 3c werden im Elektrolichtbogenofen 1 Beschickungsmaterialien, wie beispielsweise Stahl- und/oder Eisenschrott und/oder direktreduziertes Eisen, ggf. mit Legierungsmitteln und/oder Zusatzstoffen, aufgeschmolzen. Bisher ist nicht genau bekannt, wie viel der abgestrahlten Energie eines Lichtbogens in das im Elektrolichtbogenofen befindliche Schmelzgut eingebracht wird. Folglich kann es passieren, dass der Lichtbogen einer Elektrode 3a, 3b und/oder 3c frei brennt, und damit ein hoher Anteil der eingebrachten Energie an die Begrenzung des Elektrolichtbogenofens, insbesondere an die seitlichen, in der Regel gekühlten Wände 2 des Ofengefäßes 1' gelangt. Dies kann beispielsweise der Fall sein nach Schrotteinstürzen, oder bei einer zu geringen Schaumschlackenhöhe. Das freie Brennen des Lichtbogens ist jedoch insbesondere aus energetischen Gründen unerwünscht und soll daher möglichst frühzeitig erkannt werden, um diesem entgegenzuwirken. Insbesondere kann durch das erfindungsgemäße Verfahren ein freies Brennen des Lichtbogens durch Verwendung des ermittelten Strahlungsmaßes zur Regelung der Elektrodenposition verhindert werden.

Im gezeigten Beispiel sind an den Stromzuführungen der Elektroden 3a, 3b, 3c Elektrodenstromerfassungseinrichtungen 13a, 13b, 13c vorgesehen, mit Hilfe derer Strom und/oder Spannung bzw. die den Elektroden 3a, 3b, 3c zugeführte Energie gemessen werden können. Die Elektrodenstromerfassungseinrichtungen 13a, 13b, 13c sind mit einer Signalverarbeitungseinrichtung 8 wirkverbunden. D.h., es erfolgt eine kontaktlose oder auf Kontakt beruhende Übertragung von Signalen zwischen wenigstens einer Elektrodenstromerfassungseinrichtung 13a, 13b, 13c und der Signalverarbeitungseinrichtung 8. Die übermittelten Signale repräsentieren dabei den über die Zeit erfassten Elektrodenstrom. Die Übermittlung derartiger Signale erfolgt vorzugsweise kontinuierlich und für alle den Elektroden 3a, 3b, 3c zugeführten Elektrodenströme.

An einer Wand 2 bzw. an den Paneelen des Ofengefäßes 1', d.h. an der äußeren Begrenzung des Ofengefäßes 1', sind Körperschallsensoren 4a, 4b, 4c zur Erfassung von Schwingungen am Ofengefäß 1 angeordnet. Die Körperschallsensoren 4a, 4b, 4c können mittelbar und/oder unmittelbar mit dem Ofengefäß 1' bzw. mit der Wand 2 des Ofengefäßes 1' verbunden angeordnet sein. Die Körperschallsensoren 4a, 4b, 4c zur Messung von Körperschall-Schwingungen sind vorzugsweise an einer schwingfähigen Stelle der Wand 2 direkt gegenüber der jeweiligen Elektrode 3a, 3b, 3c angeordnet und es sind vorzugsweise mindestens so viele Körperschallsensoren 4a, 4b, 4c wie Elektroden 3a, 3b, 3c vorgesehen.

Die Körperschallsensoren 4a, 4b, 4c sind mit einer Signalverarbeitungseinrichtung 8 wirkverbunden. D.h., es erfolgt eine kontaktlose oder auf Kontakt beruhende Übertragung von Signalen zwischen wenigstens einem Körperschallsensor 4a, 4b, 4c und der Signalverarbeitungseinrichtung 8. Die übermittelten Signale repräsentieren dabei die über die Zeit erfassten Körperschall-Schwingungen der Wand 2 des Ofengefäßes an der Stelle des Körperschallsensors 4a, 4b, 4c. Die Übermittlung derartiger Signale erfolgt vorzugsweise kontinuierlich.

Die Signale, die von den Köperschallsensoren 4a, 4b, 4c an die Signalverarbeitungseinrichtung 8 übermittelt werden, werden vorzugsweise zumindest teilweise über einen Lichtwellenleiter 7 geleitet. Zwischen dem Lichtwellenleiter 7 und den Körperschallsensoren 4, 4a, 4b, 4c ist mindestens eine optische Einrichtung 6 angeordnet, die zur Verstärkung und/oder Umsetzung von Signalen der ein oder mehreren Körperschallsensoren 4a, 4b, 4c dient. In der näheren Umgebung des Ofengefäßes 1' bzw. unter Umständen auch unmittelbar am Ofengefäß 1' können Signalleitungen vorgesehen sein, die Signale der Körperschallsensoren 4a, 4b, 4c leiten. Die Signalleitungen sind vorzugsweise vor Hitze, elektromagnetischen Feldern, mechanischer Belastung und/oder anderen Belastungen geschützt geführt.

In der Signalverarbeitungseinrichtung 8 wird das Strahlungsmaß ermittelt, wie es nachfolgend anhand der FIG 2 bis FIG 5 erläutert wird. Das ermittelte Strahlungsmaß kann dann einer Regeleinrichtung 9 übermittelt werden, welche das Strahlungsmaß zur Einstellung einer Stellgröße für eine Prozessgröße des Elektrolichtbogenofens 1 nutzt. Bspw. kann etwa die Elektrodenposition, insbesondere die vertikale, der Elektroden 3a, 3b, 3c mit Hilfe des Strahlungsmaßes derart geregelt werden, dass die von den Elektroden 3a, 3b, 3c ausgehenden Lichtbögen von Schrott und/oder Schaumschlacke im Wesentlichen permanent eingehüllt sind. Ferner kann der Lichtbogen selbst, und damit der Energieeintrag für die jeweilige Elektrode, abhängig vom ermittelten Strahlungsmaß, geregelt werden. Auch kann ggf. die Zugabe von Medien, etwa zur Anregung von Schaumschlackebildung oder zur Schmelzgutkonditionierung, in den Elektrolichtbogenofen 1 anhand des ermittelten Strahlungsmaßes geregelt werden.

Am Beispiel der Elektrode 3a des Elektrolichtbogenofens 1 wird die Ermittlung des Strahlungsmaßes beispielhaft in Verbindung mit FIG 1 erläutert. Vorzugsweise findet die Ermittlung eines Strahlungsmaßes kontinuierlich während des Betriebs des Elektrolichtbogenofens 1 und für alle Elektroden 3a, 3b und 3c statt. Der zeitlich erfasste Elektrodenstrom für eine Elektrode 3a, erfasst mit der Elektrodenstromerfassungseinrichtung 13a, ist in FIG 2 dargestellt.

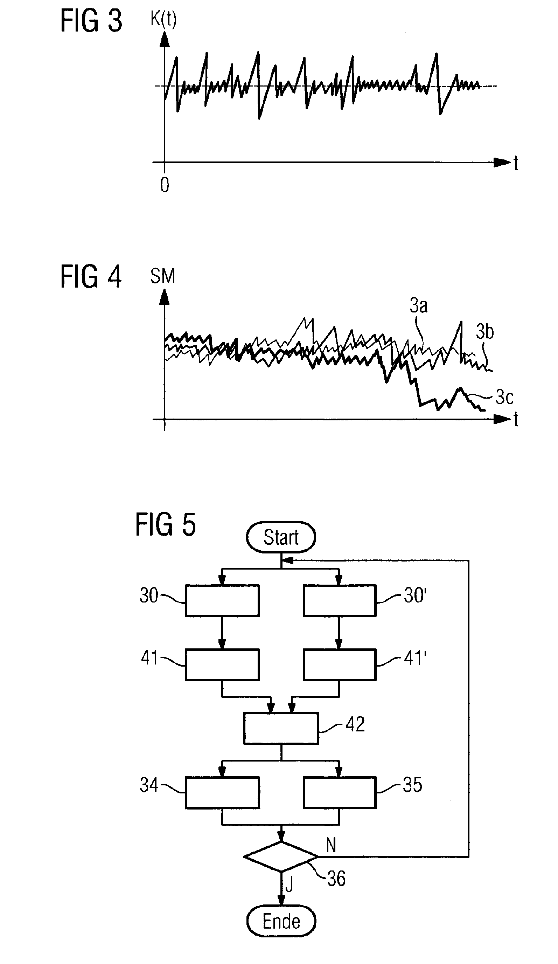

Der gemessene bzw. erfasste Elektrodenstrom wird digitalisiert, sofern die Daten noch nicht digitalisiert vorliegen. Dies geschieht mittels einer ausreichend hohen Samplingrate, bspw. von 12000 Samples pro Sekunde. Die Höhe der Samplingrate ist abhängig von den auftretenden zeitlichen Elektrodenstromänderungen: $dI(t)/dt$. Hierbei ist $I(t)$ das zeitlich veränderliche, dem Elektrodenstrom zugeordnete Elektrodenstromsignal und $t$ die Zeit. Je schneller sich der Elektrodenstrom über die Zeit ändert, desto höher ist in der Regel die Samplingrate zu wählen, um die Änderungen des Elektrodenstroms mit entsprechender Genauigkeit zu erfassen. Ggf. kann die Samplingrate abhängig von zu erwartenden Elektrodenstromänderungen eingestellt werden. Das Gesagte gilt analog für die erfassten Körperschall-Schwingungen der Wand 2 durch die Körperschallsensoren 4a, 4b, 4c. Es wird somit ein zeitlich aufgelöstes Körperschallschwingungssignal $K(t)$ erfasst, welches beispielhaft in FIG 3 dargestellt ist.

Bevor die Signalverarbeitungseinrichtung 8 zur Auswertung des Verfahrens herangezogen wird, wird vorzugsweise einmalig das Verfahren in Form eines maschinenlesbaren Programmcodes 21 mittels eines Speichermediums 22, etwa einer Compact Disc, zugeführt und auf der speicherprogrammierbaren Signalverarbeitungseinrichtung 8 hinterlegt. Damit ist die Signalverarbeitungseinrichtung 8 vorbereitet zur Durchführung eines Verfahrens zur Ermittlung eines Strahlungsmaßes in einem Elektrolichtbogenofen.

Die den mittels der Elektrodenstromerfassungseinrichtung 13a erfassten Elektrodenstrom repräsentierenden Elektrodenstromsignale $I(t)$ werden der vorbereiteten Signalverarbeitungseinrichtung 8 zugeführt. In der Signalverarbeitungseinrichtung 8 wird das Elektrodenstromsignal $I(t)$ in das Quadrat des Elektrodenstromsignals $I^2(t)$ überführt und das quadrierte Elektrodenstromsignals $I^2(t)$ aus dem Zeitraum in den Frequenzraum transformiert, so dass ein nach Frequenzanteilen aufgeteiltes quadriertes Elektrodenstromsignal $I^2(f)$ erhalten wird, wobei $f$ eine Frequenz ist. Gleichbedeutend zu $I^2(f)$ kann $I^2(\omega)$ ermittelt werden, wobei $\omega = 2\pi f$ ist. Die Transformation des quadrierten Elektrodenstromsignals $I^2(t)$ vom Zeitraum in den Frequenzraum geschieht vorzugsweise mittels Fouriertransformation. Jedoch sind ggf. auch andere Transformationsmethoden geeignet, um ein Signal aus einem Zeitraum in einen Frequenzraum zu überführen. Diese stehen dem Fachmann ebenfalls zur Verfügung. Alternativ kann auch der Betrag von $I(t)$, d.h. $|I(t)|$, verwendet werden.

Aus dem Frequenzspektrum des transformierten quadrierten Elektrodenstromsignals $I^2(t)$ wird nun ein auszuwertender Frequenzbereich festgelegt. Der auszuwertende Frequenzbereich besteht hier vorzugsweise aus einer Mehrzahl diskreter Frequenzen, nämlich aus den Vielfachen der doppelten Betriebsfrequenz $f_o$ der Elektrode, wobei vorzugsweise die Vielfachen $2f_o$, $3f_o$, $4f_o$, $5f_o$ und $6f_o$ verwendet werden. In Europa ist die Betriebsfrequenz der Elektroden in der Regel gleich der Netzfrequenz, also 50 Hz. Es wird also vorzugsweise bei der Quotientenbildung mindestens eine Frequenz aus der Gruppe: 200Hz, 300Hz, 400Hz, 500Hz oder 600Hz verwendet. In anderen Ländern, in welchen die Betriebsfrequenz der Elektrode bzw. die Netzfrequenz von 50 Hz abweicht, kann analog vorgegangen werden. Zu diesen Frequenzen wird der transformierte quadrierte Elektrodenstromanteil zur Ermittlung des Strahlungsmaßes verwendet. Im vorliegenden Ausführungsbeispiel wird das Stromauswertesignal somit vom Absolutbetrag des fouriertransformierten quadrierten Elektrodenstromsignals gebildet.

Die mittels der Körperschallsensoren 4a, 4b, 4c erfassten Köperschallschwingungssignale K(t) werden der Signalverarbeitungseinrichtung 8 zugeführt und ebenfalls vom Zeitraum in den Frequenzraum überführt. Das erfasste zeitaufgelöste Körperschallschwingungssignal K(t) ist in FIG 3 dargestellt. Ggf. können auch Potenzen ungleich eins des Körperschallschwingungssignals K(t) zur Ermittlung des Strahlungsmaßes herangezogen werden. Die Überführung des Körperschallsschwingungssignals K(t) vom Zeitraum in den Frequenzraum geschieht ebenfalls vorzugsweise mittels Fouriertransformation. Aus dem Frequenzspektrum des transformierten Köperschallschwingungssignals K(t) wird nun ein auszuwertender Frequenzbereich festgelegt, welcher identisch ist, mit dem auszuwertenden Frequenzbereich des quadrierten Elektrodenstroms $I^2(t)$. Für diese Frequenzen, im Ausführungsbeispiel $3f_o$, $4f_o$, $5f_o$ und $6f_o$, wird nun der Betrag bzw. der Absolutbetrag des transformierten Köperschallschwingungssignalanteils ermittelt. Das Schwingungsauswertesignal wird somit im vorliegenden Ausführungsbeispiel vom Betrag des fouriertransformierten Körperschallschwingungssignals gebildet.

Aus dem Stromauswertesignal und dem Schwingungsauswertesignal wird für die Frequenzen $3f_o$, $4f_o$, $5f_o$ und $6f_o$ eine Summe aus den Quotienten aus Stromauswertesignal und Schwingungsauswertesignal gebildet, wobei die Quotienten jeweils für gemeinsame Frequenzen für Stromauswertesignal und Schwingungsauswertesignal gebildet werden. Diese Summe aus Quotienten für diskrete Frequenzen bildet ein gutes Strahlungsmaß zur Bewertung einer thermischen Abstrahlung eines Lichtbogens an eine Wand eines Ofengefäßes bzw. einer Einhüllung bzw. einer Umhüllung eines zwischen einer Elektrode und Schmelzgut brennenden Lichtbogens durch Schmelzgut, etwa Feststoff oder Schaumschlacke.

Ein zeitlicher Verlauf eines Strahlungsmaßes SM während des Betriebs eines Lichtbogenofens ist in FIG 4 für verschiedene Elektroden 3a, 3b, 3c abhängig von der Zeit t dargestellt. Man erkennt aus der Darstellung in FIG 4, dass das Strahlungsmaß SM zu Beginn - im Rahmen der auftretenden Schwankungen - um ein relativ konstantes Niveau in geringem Maße schwankt. Bei der vorliegenden Darstellung des Strahlungsmaßes bedeutet dieses Niveau, dass der Lichtbogen durch Schmelzgut eingehüllt ist. Für höhere Zeiten t erkennt man, dass das Strahlungsmaß SM für die Elektrode 3c stark abfällt. Der Lichtbogen dieser Elektrode 3c brennt frei. Dies kann bspw. darauf zurückzuführen sein, dass ein den Lichtbogen einhüllender Schrotthaufen eingestürzt oder weggeschmolzen ist. Ggf. kann auch eine Veränderung des Schaumschlackeniveaus oder der vertikalen Elektrodenposition Auslöser für die verschlechterte Lichtbogeneinhüllung und damit des erhöhten Strahlungsmaßes sein. Die Ursache für das freie Brennen ist jedoch in der Regel eindeutig durch Abgleich mit anderen für den Lichtbogen bzw. für den Lichtbogenofen vorhandenen Daten, etwa elektrischen Daten, der vergangenen Zeit seit Beginn des Schmelzprozesses, Temperaturdaten, Konzentrationsmessungen für Stoffe in der Staubabsaugung, etc..., zu identifizieren. Anhand des ermittelten Strahlungsmaßes kann nun ein frei brennender Lichtbogen erkannt werden. Dadurch kann einem frei brennenden Lichtbogen besser, insbesondere schneller, entgegengewirkt werden.

FIG 5 zeigt ein Flussdiagramm, welches einen beispielhaften Ablauf des Verfahrens darstellt. Es wird hierbei davon ausgegangen, dass der Lichtbogenofen in Betrieb ist und ein Lichtbogen zwischen Elektrode und Feststoff zum Einschmelzen des Feststoffs vorgesehen und ausgebildet ist.

Zunächst wird in einem Verfahrensschritt 30 der Elektrodenstrom für jede Elektrode des Lichtbogenofens erfasst. Zeitgleich werden Körperschall-Schwingungen mittels Körperschallsensoren an einer Wand des Ofengefäßes in einem Verfahrensschritt 30' erfasst. Die Körperschall-Schwingungen der Wand des Ofengefäßes werden durch den pulsierenden Lichtbogen erregt.

Aus dem erfassten Elektrodenstrom wird dann in einem Verfahrensschritt 41 ein Stromauswertesignal ermittelt, bspw. in Form des Absolutbetrages eines fouriertransformierten quadrierten Elektrodenstroms oder eines fouriertransformierten Betrags des Elektrodenstroms. Zeitlich parallel dazu werden in einem Verfahrensschritt 41' die erfassten Körperschall-Schwingungssignale vom Zeitraum in den Frequenzraum transformiert und anschließend ein Betrag des transformierten, komplexen Körperschallschwingungssignals ermittelt.

Die Frequenzen, für die ein Quotient gebildet werden soll, werden vorzugsweise vor Beginn des Verfahrens festgelegt. Vorzugsweise sind dies Vielfache der doppelten Betriebsfrequenz einer Elektrode.

Dann werden in einem Verfahrensschritt 42 Quotienten aus dem frequenzabhängigen Stromauswertesignal und dem frequenzabhängigen Schwingungsauswertesignal für die jeweiligen Frequenzen ermittelt. Aus diesen wird in einem Verfahrensschritt 43 eine Summe von Quotienten für mehrere unterschiedliche, den jeweiligen Quotienten gemeinsame Frequenzen gebildet, auf welchen das Strahlungsmaß im Wesentlichen beruht. Zusätzlich können Wichtungsfaktoren für die verschiedenen Quotienten vorgesehen werden, um ggf. das Strahlungsmaß für einen bestimmten, durch bauliche Eigenart gekennzeichneten Elektrolichtbogenofen zu adaptieren. Ferner können weitere Skalierungsfaktoren für das Strahlungsmaß herangezogen werden, um eine noch aussagekräftigere Darstellung für das Strahlungsmaß zu erhalten.

Das ermittelte Strahlungsmaß wird vorzugsweise einerseits, in einem Verfahrensschritt 34, dem Bedienpersonal des Lichtbogenofens graphisch zur Anzeige gebracht. Andererseits werden in einem parallel ablaufenden Verfahrensschritt 35 aus dem Strahlungsmaß Stellgrößen für den Elektrolichtbogenofen berechnet, um in den Schmelzprozess vorteilhaft einzugreifen. Anschließend wird in einem Verfahrensschritt 36 geprüft, ob das Verfahren beendet werden soll. Ist dies nicht der Fall, da bspw. der Schmelzvorgang noch nicht abgeschlossen ist, so wird das Verfahren so lange durchgeführt, bis das Verfahren beendet werden soll.

Die Ausgabe von Informationen zum Strahlungsmaß an das Bedienpersonal sowie die Steuerung und/oder Regelung des Lichtbogenofens anhand des Strahlungsmaßes sind optionale Bestandteile des Verfahrens.

## Patentansprüche

1. Verfahren zur Ermittlung eines Strahlungsmaßes (SM) für eine von einem zwischen einer Elektrode (3a, 3b, 3c) und Schmelzgut brennenden Lichtbogen ausgehende, auf eine Begrenzung (2) des Lichtbogenofens (1) treffende thermische Strahlung, wobei ein der Elektrode (3a, 3b, 3c) zugeführter Elektrodenstrom erfasst (30) wird, wobei Körperschall-Schwingungen des Lichtbogenofens (1) erfasst (30') werden, wobei aus dem erfassten Elektrodenstrom ein einem Frequenzbereich des erfassten Elektrodenstroms zugeordnetes Stromauswertesignal ermittelt (41) wird, wobei aus den erfassten Körperschall-Schwingungen ein einem Frequenzbereich der erfassten Körperschall-Schwingungen zugeordnetes Schwingungsauswertesignal ermittelt (41') wird, wobei als Strahlungsmaß (SM) ein Quotient aus Schwingungsauswertesignal und Stromauswertesignal für wenigstens eine dem erfassten Elektrodenstrom und den erfassten Körperschallschwingungen gemeinsame Frequenz gebildet (42) wird.

2. Verfahren nach Anspruch 1, **dadurch gekennzeichnet, dass** als Strahlungsmaß (SM) eine Summe aus für mehrere gemeinsame Frequenzen ($3f_0$, $4f_0$, $5f_0$, $6f_0$) gebildete Quotienten gebildet (43) wird.

3. Verfahren nach Anspruch 2, **dadurch gekennzeichnet, dass** wenigstens eine der mehreren gemeinsamen Frequenzen ($3f_0$, $4f_0$, $5f_0$, $6f_0$) aus der Gruppe ausgewählt werden, die aus den Vielfachen der doppelten Betriebsfrequenz ($f_0$) der Elektrode (3a, 3b, 3c) besteht.

4. Verfahren nach einem der Ansprüche 1 bis 3, **dadurch gekennzeichnet, dass** das frequenzabhängige Stromauswertesignal basiert auf

$$I_n(\omega) \propto \int_a^b I(t)^n e^{-i\omega t} dt \text{ oder auf}$$

$$I_n(\omega) \propto \int_a^b |I(t)|^n e^{-i\omega t} dt$$

mit n als Parameter, $n \in 1,2,3,...$
mit i: imaginäre Einheit
mit e: Euler'sche Zahl
mit t: Zeit
mit $\omega$: Kreisfrequenz des Elektrodenstroms
mit I(t): zeitabhängiger, erfasster Elektrodenstrom
mit I($\omega$): frequenzabhängiger Elektrodenstrom
mit a: Anfang des Integrationsintervalls
mit b: Ende des Integrationsintervalls

5. Verfahren nach Anspruch 4, **dadurch gekennzeichnet, dass** n für

$$I_n(\omega) \propto \int_a^b I(t)^n e^{-i\omega t} dt \text{ gleich zwei gewählt}$$

wird.

6. Verfahren nach Anspruch 4, **dadurch gekennzeichnet, dass** n für

$$I_n(\omega) \propto \int_a^b |I(t)|^n e^{-i\omega t} dt \text{ gleich eins gewählt}$$

wird.

7. Verfahren nach einem der Ansprüche 1 bis 6, **dadurch gekennzeichnet, dass** das frequenzabhängige Stromauswertesignal gebildet wird als frequenzabhängiger Absolutbetrag

$$\left|\overline{I_n(\omega)}\right| = \sqrt{\overline{I_n(\omega)} \cdot I_n(\omega)^*} \quad \text{der Funktion}$$

$I_n(\omega)$.

8. Verfahren nach einem der Ansprüche 1 bis 7, **dadurch gekennzeichnet, dass** das frequenzabhängige Schwingungsauswertesignal gebildet wird als frequenzabhängiger Absolutbetrag

$$\left|K_n(\omega)\right| = \sqrt{K_n(\omega) \cdot K_n(\omega)^*} \quad \text{der Funktion:}$$

$$K_n(\omega) \propto \int_a^b K(t)^n e^{-i\omega t} dt$$

mit n als Parameter, n $\in$ 1,2,3,...
mit i: imaginäre Einheit
mit e: Euler'sche Zahl
mit t: Zeit
mit $\omega$: Kreisfrequenz der erfassten Körperschall-schwingungen
mit K(t): zeitabhängiges, erfasster Körperschallsignal
mit K($\omega$): frequenzabhängiges Körperschallsignal
mit $\overline{K(\omega)}$ : konjugiert komplexes Körperschallsignal zu K($\omega$)
mit a: Anfang des Integrationsintervalls
mit b: Ende des Integrationsintervalls

**9.** Verfahren nach einem der Ansprüche 1 bis 8, **dadurch gekennzeichnet, dass** das Strahlungsmaß (SM) zur Steuerung und/oder Regelung einer Prozessgröße des Lichtbogenofens (1) verwendet wird.

**10.** Signalverarbeitungseinrichtung (8) für einen Lichtbogenofen (1), mit einem maschinenlesbaren Programmcode (21), welcher Steuerbefehle aufweist, die die Signalverarbeitungseinrichtung (8) zur Durchführung eines Verfahrens nach einem der Ansprüche 1 bis 9 veranlassen.

**11.** Maschinenlesbarer Programmcode (21) für eine Signalverarbeitungseinrichtung (8) für einen Lichtbogenofen (1), wobei der Programmcode (21) Steuerbefehle aufweist, die die Signalverarbeitungseinrichtung (8) zur Durchführung des Verfahrens nach einem der Ansprüche 1 bis 9 veranlassen.

**12.** Speichermedium (22) mit einem darauf gespeicherten maschinenlesbaren Programmcode (21) gemäß Anspruch 11.

**13.** Lichtbogenofen (1) mit wenigstens einer Elektrode (3a, 3b, 3c), mit einer Elektrodenstromerfassungseinrichtung (13a, 13b, 13c) zur Erfassung eines der wenigstens einen Elektrode (3a, 3b, 3c) zugeführten Elektrodenstroms (I(t)), mit Körperschallsensoren (4a, 4b, 4c) zur Erfassung von Körperschall einer Begrenzung (2) des Lichtbogenofens (1), und mit einer Signalverarbeitungseinrichtung (8) nach Anspruch 10, wobei die Elektrodenstromerfassungseinrichtung (13a, 13b, 13c) und die Körperschallsensoren (4a, 4b, 4c) mit der Signalverarbeitungseinrichtung (8) wirkverbunden sind.

**14.** Lichtbogenofen nach Anspruch 13, **dadurch gekennzeichnet, dass** die Signalverarbeitungseinrichtung (8) mit einer Steuer- und/oder Regeleinrichtung (9) zur Ermittlung einer Stellgröße für eine Prozessgröße des Lichtbogenofens (1) aus dem Strahlungsmaß (SM) wirkverbunden ist.

**Claims**

**1.** Method for determining a radiation measure (SM) for thermal radiation which originates from an arc burning between an electrode (3a, 3b, 3c) and a material to be melted and strikes a boundary (2) of the arc furnace (1), wherein an electrode current which is supplied to the electrode (3a, 3b, 3c) is detected (30), wherein structure-borne sound oscillations of the arc furnace (1) are detected (30'), wherein a current evaluation signal, which is associated with a frequency range of the detected electrode current, is determined (41) from the detected electrode current, wherein an oscillation evaluation signal which is associated with a frequency range of the detected structure-borne sound oscillations is determined (41') from the detected structure-borne sound oscillations, wherein a quotient of the oscillation evaluation signal and current evaluation signal is formed (42) as a radiation measure (SM) for at least one frequency which is common to the detected electrode current and the detected structure-borne sound oscillations.

**2.** Method according to Claim 1, **characterized in that** a sum of quotients which are formed for a plurality of common frequencies $(3f_o, 4f_o, 5f_o, 6f_o)$, is formed (43) as the radiation measure (SM).

**3.** Method according to Claim 2, **characterized in that** at least one of the plurality of common frequencies $(3f_o, 4f_o, 5f_o, 6f_o)$ is selected from the group which consists of the multiples of twice the operating frequency $(f_o)$ of the electrode (3a, 3b, 3c).

**4.** Method according to one of Claims 1 to 3, **characterized in that** the frequency-dependent current evaluation signal is based on

$$I_n(\omega) \propto \int_a^b I(t)^n e^{-i\omega t} dt \qquad \text{or} \qquad \text{on}$$

$$I_n(\omega) \propto \int_a^b |I(t)|^n e^{-i\omega t} dt$$

where n is a parameter, n $\varepsilon$ 1,2,3,...
where i: imaginary unit
where e: Euler's number
where t: time
where $\omega$: angular frequency of the electrode current
where I(t): time-dependent, detected electrode current
where I($\omega$): frequency-dependent electrode current
where a: start of the integration interval
where b: end of the integration interval

**5.** Method according to Claim 4, **characterized in that** n, for

$$I_n(\omega) \propto \int_a^b I(t)^n e^{-i\omega t} dt \, ,$$ is selected to be equal to two.

**6.** Method according to Claim 4, **characterized in that** n, for

$$I_n(\omega) \propto \int_a^b |I(t)|^n e^{-i\omega t} dt \, ,$$ is selected to be equal to one.

**7.** Method according to one of Claims 1 to 6, **characterized in that** the frequency-dependent current evaluation signal is formed as the frequency-dependent absolute magnitude

$$\left| I_n(\omega) \right| = \sqrt{I_n(\omega) \cdot I_n(\omega)} * \text{ of the function } I_n(\omega).$$

**8.** Method according to one of Claims 1 to 7, **characterized in that** the frequency-dependent oscillation evaluation signal is formed as the frequency-dependent absolute magnitude

$$\left| K_n(\omega) \right| = \sqrt{K_n(\omega) \cdot K_n(\omega)} * \text{ of the function:}$$

$$K_n(\omega) \propto \int_a^b K(t)^n e^{-i\omega t} dt$$

where n is a parameter, $n \, \varepsilon \, 1,2,3,...$
where i: imaginary unit
where e: Euler's number
where t: time
where $\omega$: angular frequency of the detected structure-borne sound oscillations
where K(t): time-dependent, detected structure-borne sound signal
where $K(\omega)$: frequency-dependent structure-borne sound signal
where $K(\omega)^*$: complex-conjugate structure-borne sound signal relating to $K(\omega)$
where a: start of the integration interval
where b: end of the integration interval

**9.** Method according to one of Claims 1 to 8, **characterized in that** the radiation measure (SM) is used for controlling and/or regulating a process variable of the arc furnace (1).

**10.** Signal processing device (8) for an arc furnace (1), having a machine-legible program code (21) which has control commands which cause the signal processing device (8) to carry out a method according to one of Claims 1 to 9.

**11.** Machine-legible program code (21) for a signal processing device (8) for an arc furnace (1), wherein the program code (21) has control commands which cause the signal processing device (8) to carry out the method according to one of Claims 1 to 9.

**12.** Memory medium (22) having a machine-legible program code (21) according to Claim 11 stored in it.

**13.** Arc furnace (1) having at least one electrode (3a, 3b, 3c), having an electrode current detection device (13a, 13b, 13c) for detecting an electrode current (I(t)) which is supplied to the at least one electrode (3a, 3b, 3c), having structure-borne sound sensors (4a, 4b, 4c) for detecting structure-borne sound in a boundary (2) of the arc furnace (1), and having a signal processing device (8) according to Claim 10, wherein the electrode current detection device (13a, 13b, 13c) and the structure-borne sound sensors (4a, 4b, 4c) are operatively connected to the signal processing device (8).

**14.** Arc furnace according to Claim 13, **characterized in that** the signal processing device (8) is operatively connected to a control and/or regulating device (9) for determining a manipulated variable for a process variable of the arc furnace (1) from the radiation measure (SM).

**Revendications**

**1.** Procédé de détermination d'une mesure de rayonnement (SM) pour un rayonnement thermique atteignant une clôture (2) d'un four à arc (1), issu d'un arc jaillissant entre une électrode (3a, 3b, 3c) et une matière à fondre, dans lequel un courant d'électrode amené à l'électrode (3a, 3b, 3c) est enregistré (30), dans lequel des oscillations de bruit solidien du four à arc (1) sont enregistrées (30'), dans lequel un signal d'évaluation de courant associé à une plage de fréquences du courant d'électrode enregistré est déterminé (41) à partir du courant d'électrode enregistré, dans lequel un signal d'évaluation d'oscillation associé à une plage de fréquences des oscillations de bruit solidien enregistrées est déterminé (41') à partir des oscillations de bruit solidien enregistrées, dans lequel un quotient du signal d'évaluation d'oscillation et du signal d'évaluation de courant est créé (42) en tant que mesure de rayonnement (SM) pour au moins une fréquence commune au courant d'électrode enregistré et aux oscillations de bruit solidien enregistrées.

**2.** Procédé selon la revendication 1, **caractérisé en ce qu'**une somme de quotients créés pour plusieurs fréquences communes ($3f_0$, $4f_0$, $5f_0$, $6f_0$) est créée (43) en tant que mesure de rayonnement (SM).

**3.** Procédé selon la revendication 2, **caractérisé en ce qu'**au moins une des plusieurs fréquences communes ($3f_0$, $4f_0$, $5f_0$, $6f_0$) est ou sont choisie (s) parmi le groupe constitué des multiples du double de la fréquence de fonctionnement ($f_0$) de l'électrode (3a, 3b, 3c).

**4.** Procédé selon l'une quelconque des revendications 1 à 3, **caractérisé en ce que** le signal d'évaluation de courant dépendant de la fréquence est basé sur

$$\mathbf{I_n(\omega) \propto \int_a^b I(t)^n\, e^{-i\omega t} dt}$$

ou sur

$$\mathbf{I_n(\omega) \propto \int_a^b |I(t)|^n\, e^{-i\omega t} dt}$$

avec n en tant que paramètre, $n \in 1, 2, 3...$
avec i : unité imaginaire
avec e : nombre d'Euler
avec t : temps
avec $\omega$ : fréquence angulaire du courant d'électrode
avec I(t) : courant d'électrode enregistré dépendant du temps
avec $I(\omega)$ : courant d'électrode dépendant de la fréquence
avec a : début de l'intervalle d'intégration
avec b : fin de l'intervalle d'intégration.

**5.** Procédé selon la revendication 4, **caractérisé en ce que** n est choisi égal à deux pour

$$\mathbf{I_n(\omega) \propto \int_a^b I(t)^n\, e^{-i\omega t} dt}\,.$$

**6.** Procédé selon la revendication 4, **caractérisé en ce que** n est choisi égal à un pour

$$\mathbf{I_n(\omega) \propto \int_a^b |I(t)|^n\, e^{-i\omega t} dt}\,.$$

**7.** Procédé selon l'une quelconque des revendications 1 à 6, **caractérisé en ce que** le signal d'évaluation de courant dépendant de la fréquence est créé en tant que valeur absolue dépendante de la fréquence

$$\mathbf{|I_n(\omega)| = \sqrt{I_n(\omega) \cdot I_n(\omega)^*}}\ \text{de la fonction}$$

$I_n(\omega)$.

**8.** Procédé selon l'une quelconque des revendications 1 à 7, **caractérisé en ce que** le signal d'évaluation d'oscillation dépendant de la fréquence est créé en tant que valeur absolue dépendante de la fréquence

$$\mathbf{|K_n(\omega)| = \sqrt{K_n(\omega) \cdot K_n(\omega)^*}}\ \text{de la}$$

fonction :

$$\mathbf{K_n(\omega) \propto \int_a^b K(t)^n\, e^{-i\omega t} dt}$$

avec n en tant que paramètre, $n \in 1, 2, 3,...$
avec i : unité imaginaire
avec e : nombre d'Euler
avec t : temps
avec $\omega$ : fréquence angulaire des oscillations de bruit solidien enregistrées
avec K(t) : signal de bruit solidien enregistré dépendant du temps
avec $K(\omega)$ : signal de bruit solidien dépendant de la fréquence
avec $K(\omega)^*$ : signal de bruit solidien complexe conjugué par rapport à $K(\omega)$
avec a : début de l'intervalle d'intégration
avec b : fin de l'intervalle d'intégration.

**9.** Procédé selon l'une quelconque des revendications 1 à 8, **caractérisé en ce que** la mesure de rayonnement (SM) est utilisée pour une commande et/ou régulation d'une grandeur de procédé du four à arc (1).

**10.** Appareil de traitement de signal (8) pour un four à arc (1), avec un code programme (21) pouvant être lu par une machine, qui présente des instructions de commande qui enjoignent à l'appareil de traitement de signal (8) de mettre en oeuvre un procédé selon l'une quelconque des revendications 1 à 9.

**11.** Code programme (21) pouvant être lu par une machine pour un appareil de traitement de signal (8) pour un four à arc (1), dans lequel le code programme (21) présente des instructions de commande qui enjoignent à l'appareil de traitement de signal (8) de mettre en oeuvre le procédé selon l'une quelconque des revendications 1 à 9.

**12.** Support de stockage (22) avec un code programme (21) selon la revendication 11 pouvant être lu par une machine et stocké sur ledit support.

**13.** Four à arc (1) avec au moins une électrode (3a, 3b, 3c), avec un appareil d'enregistrement de courant d'électrode (13a, 13b, 13c) destiné à l'enregistrement d'un courant d'électrode (I(t)) amené à la au moins une électrode (3a, 3b, 3c), avec des capteurs de bruit solidien (4a, 4b, 4c) destinés à l'enregistrement d'un bruit solidien d'une clôture (2) du four à arc (1), et avec un appareil de traitement de signal (8) selon la revendication 10, dans lequel l'appareil d'enregistrement de courant d'électrode (13a, 13b, 13c) et les capteurs de bruit solidien (4a, 4b, 4c) sont reliés de manière fonctionnelle à l'appareil de traitement de signal (8).

**14.** Four à arc selon la revendication 13, **caractérisé en ce que** l'appareil de traitement de signal (8) est relié de manière fonctionnelle à un appareil de commande et/ou régulation (9) afin de déterminer une grandeur d'ajustement pour une grandeur de procédé du four à arc (1) à partir de la mesure de rayonnement (SM).

# FIG 1

# FIG 2

FIG 3

K(t)

t

0

FIG 4

SM

3a

3b

3c

t

FIG 5

Start

30 — 30'

41 — 41'

42

34 — 35

N

J — 36

Ende